# EUROPÄISCHE PATENTSCHRIFT

(11) **EP 1 196 486 B1**
(45) Veröffentlichungstag und Bekanntmachung des Hinweises auf die Patenterteilung: **01.10.2003**
(21) Anmeldenummer: 00953010.6
(22) Anmeldetag: 05.07.2000
(51) Int. Cl.: C08J 9/12, C08J 9/00, C08L 25/06

(54) **VERFAHREN ZUR HERSTELLUNG VON SCHAUMSTOFFPLATTEN**
METHOD OF PRODUCING FOAMED SLABS
PROCEDE DE FABRICATION DE PLAQUES EN MATERIAU ALVEOLAIRE

(30) Priorität: 13.07.1999 DE 19932619
(43) Veröffentlichungstag der Anmeldung: 17.04.2002
(73) Patentinhaber: BASF AKTIENGESELLSCHAFT, 67056 Ludwigshafen (DE)
(72) Erfinder: DIETZEN, Franz-Josef, D-67071 Ludwigshafen (DE); EHRMANN, Gerd, D-67146 Deidesheim (DE); TURZNIK, Gerhard, D-67269 Grünstadt (DE); ALICKE, Gerhard, D-67549 Worms (DE); HAHN, Klaus, D-67281 Kirchheim (DE)
(86) Internationale Anmeldenummer: EP0006297
(87) Internationale Veröffentlichungsnummer: WO01004191

(56) Entgegenhaltungen:
- WO-A-96/14354
- WO-A-99/16815
- DE-A- 19 709 119
- US-A- 5 340 844

## Beschreibung

Die Erfindung betrifft ein Verfahren zur Herstellung von Schaumstoffplatten mit einer Dichte von 20 bis 200 g·l⁻¹ und einem Querschnitt von mindestens 50 cm² auf Basis von Styrolpolymerisaten, die Graphitpartikel zur Verminderung der Wärmeleitfähigkeit enthalten.

Extrudierte Polystyrol-Schaumstoffe (XPS) werden in großem Maß zum Isolieren von Gebäuden und Gebäudeteilen eingesetzt. Für diesen Anwendungszweck müssen die Schaumstoffplatten eine möglichst niedrige Wärmeleitfähigkeit aufweisen. Neuerdings werden aus Umweltschutzgründen zur Herstellung von XPS-Platten halogenfreie Treibmittel, vorzugsweise CO₂-haltige Treibmittelgemische eingesetzt. CO₂ diffundiert aber wesentlich rascher als fluorhaltige Gase aus den Schaumstoffzellen heraus und wird durch Luft ersetzt. Aus diesem Grund ist die Wärmeleitfähigkeit von XPS-Platten, die mit CO₂-haltigen Treibmitteln hergestellt wurden, etwas höher als die von XPS-Platten, die mit Fluorkohlenwasserstoffen hergestellt wurden. Aus der EP-A 863 175 ist bekannt, daß durch Zusatz von Graphitpartikeln bei der XPS-Herstellung die Wärmeleitfähigkeit reduziert werden kann. Es hat sich jedoch gezeigt, daß dabei aufgrund der nucleierenden Wirkung des Graphits ein sehr feinzelliger Schaum entsteht, was dazu führt, daß keine dicken Platten erhalten werden können. Der Erfindung lag daher die Aufgabe zugrunde, möglichst dicke XPS-Platten mit niedriger Wärmeleitfähigkeit bereitzustellen.

Diese Aufgabe wird gelöst, wenn man bei der Herstellung von Schaumstoffplatten mit einer Dichte vom 20 bis 200 g·l⁻¹ und einem Querschnitt von mindestens 50 cm² durch Extrudieren und Verschäumen einer Mischung aus einem Styrolpolymerisat, 3 bis 15 Gew.-% eines flüchtigen Treibmittels und 0,2 bis 10 Gew.-% Graphitpartikel, jeweils bezogen auf das Styrolpolymerisat, sowie ggf. üblichen Zusatzstoffen, als flüchtiges Treibmittel ein Gemisch einsetzt aus
95 bis 20 Gew.-% CO₂
5 bis 80 Gew.-% H₂O und
0 bis 75 Gew.-% einer flüchtigen organischen Verbindung,
wobei sich die Prozentzahlen zu 100 addieren.

Die WO 93/25 608 beschreibt die Herstellung von XPS-Schaumstoffen mit bimodaler Schaumstruktur unter Verwendung eines Treibmittelgesmisches aus CO₂, H₂O und C₂H₅OH unter Zusatz von Ruß bei der Extrusion. Der Wassergehalt im Treibmittelgemisch soll für die bimodale Schaumstruktur verantwortlich sein, der Ruß-Zusatz soll eine Verringerung der Wärmeleitfähigkeit bewirken. Es hat sich jedoch gezeigt, daß eine bimodale Schaumstruktur von Nachteil ist, weil sie die Bearbeitung der Schaumstoffplatten, z.B. durch Sägen, Fräsen, Schneiden und Prägen erschwert. Überraschenderweise wurde gefunden, daß bei dem Zusatz von Graphit anstelle von Ruß nicht nur die Wärmeleitfähigkeit stärker erniedrigt wird, sondern auch das Entstehen einer bimodalen Schaumstruktur vermieden werden kann. Schließlich findet sich in WO 93/25 608 kein Hinweis darauf, daß der Wassergehalt im Treibmittelgemisch die Herstellung von dicken Platten ermöglicht.

Die WO 94/09 975 lehrt, daß XPS-Schaumstoffe mit unimodaler Schaumstruktur bei Verwendung eines CO₂/H₂O-Treibmittelgemisches dann erhalten werden, wenn man die Wasserlöslichkeit der Polymerschmelze erhöht. Ein Zusatz von Graphit-Partikeln bei der XPS-Herstellung wird in der Druckschrift nicht erwähnt.

Styrolpolymerisate im Sinne dieser Erfindung sind Polystyrol und Mischpolymerisate des Styrols, die mindestens 50 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen wie Vinylcarbazol, Maleinsäureanhydrid oder auch geringe Mengen an Verbindungen, die zwei polymerisierbare Doppelverbindungen enthalten wie Butadien, Divinylbenzol oder Butandioldiacrylat.

Die Schaumstoffplatten enthalten 0,2 bis 10 Gew.- % Graphitpartikel in homogener Verteilung, vorzugsweise 1 bis 8 Gew.-% Graphit mit einer Partikelgröße von 1 bis 100 µm, vorzugsweise 2 bis 20 µm.

Zweckmäßigerweise werden bei der XPS-Herstellung Flammschutzmittel zugesetzt, vorzugsweise 0,5 bis 5 Gew.-% organische Bromverbindungen mit einem Bromgehalt von mehr als 70 %, wie z.B. Hexabromcyclododecan, vorzugsweise zusammen mit 0,1 bis 0,5 Gew.-% einer C-C- oder O-O-labilen organischen Verbindung, wie Dicumylperoxid oder bevorzugt Dicumyl.

Als weitere übliche Zusatz- und/oder Hilfsstoffe können der Polystyrolmatrix Antistatika, Stabilisatoren, Farbstoffe, Füllstoffe und/oder Keimbildner in üblichen Mengen zugesetzt werden.

Als Treibmittel werden 3 bis 15, vorzugsweise 4 bis 12 Gew.-%, bezogen auf das Styrolpolymerisat, eines Gemisches eingesetzt aus
95 bis 20, vorzugsweise 90 bis 30 Gew.-% CO₂
5 bis 80, vorzugsweise 5 bis 70 Gew.-% H₂O und
0 bis 75, vorzugsweise 0 bis 60 Gew.-% einer flüchtigen organischen Verbindung.

Die flüchtige organische Verbindung weist vorzugsweise einen Siedepunkt zwischen 0 und 100°C, insbesondere zwischen 30 und 80°C auf. Geeignet sind z.B. Alkohole, aliphatische Kohlenwasserstoffe, Ketone und Ether. Besonders bevorzugt ist Ethanol.

Der Zusatz von Wasser im Treibmittelgemisch hat den Vorteil,
daß die Menge an brennbaren organischen Treibmitteln verringert werden kann bzw. daß man ganz darauf verzichten kann. Wenn als Mittel zur Reduzierung der Wärmeleitfähigkeit der Schaumstoffplatten Graphit anstelle von Ruß eingesetzt wird, dann erhält man auch mit H₂O als Treibmittel eine unimodale Schaumstruktur. Die Mitverwendung von Wasser als Treibmittel vermindert offenbar die nucleierende Wirkung des Graphits, so daß auch dicke Schaumstoffplatten hergestellt werden können.

Die in den Beispielen genannten Prozente beziehen sich auf das Gewicht.

### Beispiele

Die Schaumstoffproben wurden auf einer Tandemanlage extrudiert. Diese besteht aus einem Doppelschneckenextruder ZKS53 und einem Einschneckenkühlextruder (KE 90). Polymer und Zusatzstoffe wurden dem Doppelschneckenextruder zugeführt. Das Polymere wurde bei 210°C aufgeschmolzen und die Mischung der Treibmittel wurde gemeinsam an einem Punkt eingespritzt. Die treibmittelhaltige Schmelze wurde dann im zweiten Extruder auf die zum Schäumen notwendige Temperatur von 120-135°C abgekühlt. Der Durchsatz betrug 50 kg/h, die Düse hatte eine Breite von 70 mm und 3 mm Düsenspalthöhe. Dem Polystyrol wurde Graphitpulver (AF spez. 96-97, mittlere Teilchengröße 7 µm, der Fa. Graphitwerk Kropfmühle) zugegeben. Treibmittelzusammensetzung und Ergebnis siehe Tabelle.

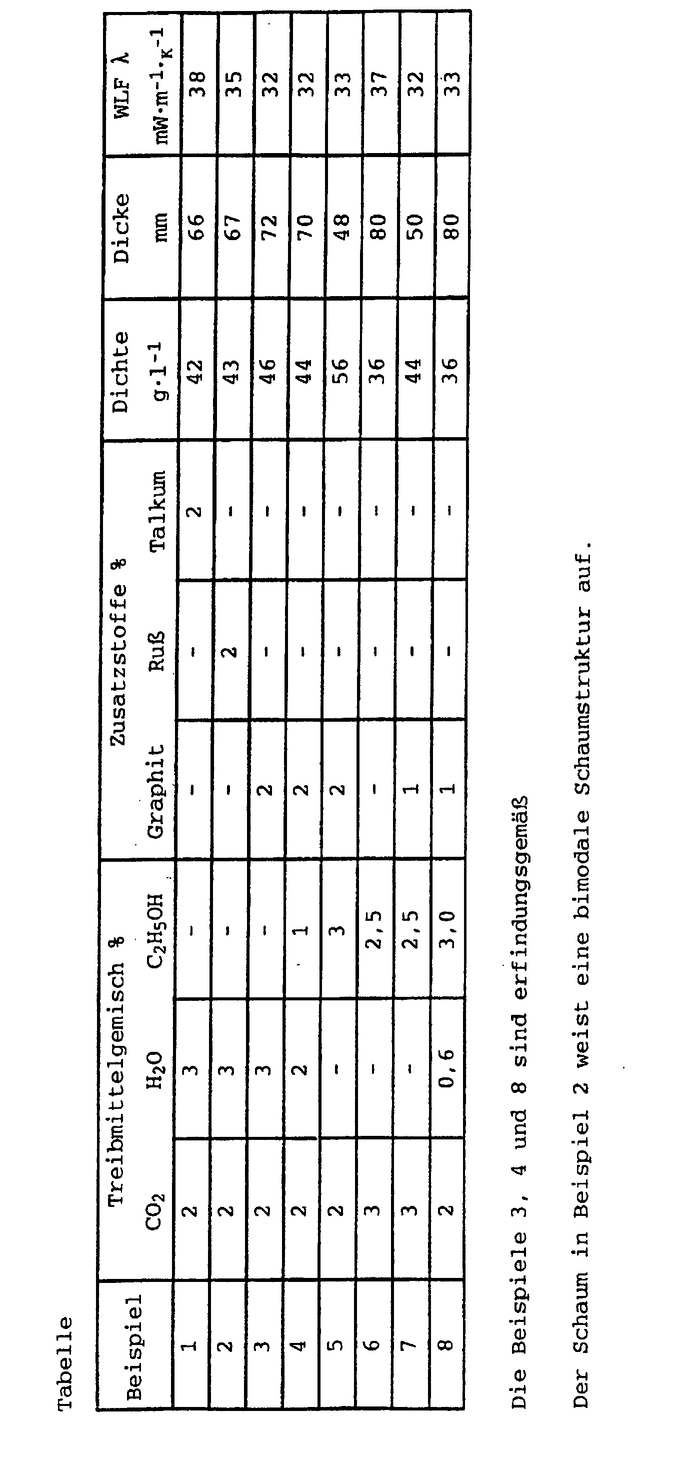

## Patentansprüche

1. Verfahren zur Herstellung von Schaumstoffplatten mit einer Dichte vom 20 bis 200 g·l⁻¹ und einem Querschnitt von mindestens 50 cm² durch Extrudieren und Verschäumen einer Mischung aus einem Styrolpolymerisat, 3 bis 15 Gew.-% eines flüchtigen Treibmittels und 0,2 bis 10 Gew.-% Graphitpartikel, jeweils bezogen auf das Styrolpolymerisat, sowie ggf. üblichen Zusatzstoffen, **dadurch gekennzeichnet, daß** das flüchtige Treibmittel ein Gemisch ist aus
95 bis 20 Gew.-% CO₂
5 bis 80 Gew.-% H₂O und
0 bis 75 Gew.-% einer flüchtigen organischen Verbindung.

## Claims

1. A process for producing foam sheets with density of from 20 to 200 g·l⁻¹ and with cross section of at least 50 cm² by extrusion and foaming of a mixture made from a styrene polymer, from 3 to 15% by weight of a volatile blowing agent and from 0.2 to 10% by weight of graphite particles, based in each case on the styrene polymer, where appropriate with conventional additives, which comprises using a volatile blowing agent which is a mixture made from
from 95 to 20% by weight of CO₂,
from 5 to 80% by weight of H₂O, and
from 0 to 75% by weight of a volatile organic compound.

## Revendications

1. Procédé de préparation de plaques en mousse ayant une densité de 20 à 200 g·l⁻¹ et une section transversale d'au moins 50 cm², par extrusion et moussage d'un mélange à base d'un polymère de styrène, de 3 à 15% en poids d'un agent gonflant volatil et de 0,2 à 10% en poids de particules de graphite, chaque fois par rapport au polymère de styrène, ainsi qu'éventuellement d'additifs courants, **caractérisé en ce que** l'agent gonflant volatil est un mélange
de 95 à 20% en poids de CO₂,
de 5 à 80% en poids de H₂O, et
de 0 à 75% en poids d'un composé organique volatil.
